## Europäisches Patentamt
## European Patent Office
## Office européen des brevets

(19)

(11) Publication number: **0 062 621**
**A2**

(12) # EUROPEAN PATENT APPLICATION

(21) Application number: **82850054.6**

(22) Date of filing: **16.03.82**

(51) Int. Cl.³: **B 23 G 5/00**, B 23 B 27/06

(30) Priority: **08.04.81 DE 3114104**

(71) Applicant: **Santrade Limited, P.O. Box 321, CH-6002 Luzern (CH)**

(43) Date of publication of application: **13.10.82 Bulletin 82/41**

(72) Inventor: **Lagerberg, Stig Erik Valter, Sandsiingan 31, S-811 52 Sandviken (SE)**
Inventor: **Ahlfors, Leif Harry, Reiterweg 4, Heppenheim (DE)**

(84) Designated Contracting States: **BE DE FR GB IT SE**

(74) Representative: **Taquist, Lennart et al, Sandvik AB Patents & Licences Fack, S-811 81 Sandviken 1 (SE)**

(54) **Cutting insert for thread cutting.**

(57) The invention provides a cutting insert for thread cutting operations of reversible type. The insert is prismatic in shape, one side surface of which being serrated so as to expose an even number of cutting teeth, the opposite side surface of which insert being intended as a side supporting surface. The insert is properly designed for grinding purposes and simultaneously enables stable clamping into a complementary shape of an insert receiving place of a toolholder, primarily because of two non-centrally passing clamp pin receiving bores.

Cutting insert for thread cutting

The present invention relates to a cutting insert of indexable type, and more specifically a cutting insert for high-speed thread cutting.

Various attempts have been made in cutting threads with inserts of cemented carbide material to pattern the cuts of the insert teeth with a view to assuring a resultant chip which reduces the difficulties of packing and binding in the cutting throat. Examples of the type of cuts, which have been employed, are disclosed for instance in US Patent No. 3.176.330. Usually a plurality of such thread cutting inserts are clamped into place in a carrier and mounted in a rotary spindle head and are rotated concurrently at relatively high speeds about the axis of a workpiece during the threading operation.

A common disadvantage with all these prior art inserts for high speed thread cutting is that they are not indexable or reversible in nature, they are not secured into their insert sites in a fully stable manner and usually they are clamped into place in a carrier block by clamping means comprising a movable clamp member and additionally a chip breaker interposed between the clamp member and the leading face of the insert.

It is an object of the present invention to provide a new type of insert for thread cutting purposes and simultaneF ously make such insert adapted for a simplified and more stable clamping into its insert-receiving pocket of a pertaining tool holder.

The insert of the present invention comprises a block of basically prismatic shape having parallel top and bottom surfaces and four side surfaces therebetween, one of which side surfaces defines a side support surface and two of which define transversely extending block end surfaces, said insert being characterized in that the side surface located opposite said side support surface is serrated so as to expose an even number of cutting teeth extending entirely between the top and bottom surfaces, the distance between the front end face of said cutting teeth and said side support surface measured transversely of the block being successively increasing in an order of succession from the first tooth to and including half the number of teeth whereas corresponding distance between the subsequent half number of teeth and said side support surface decreasing similarly.

Other essential features of the invention will be more readily apparent from the following detailed description in combination with the corresponding drawings in which

Fig. 1 shows a longitudinal section of a tool provided with a thread cutting insert of the invention,

Fig. 2 shows a section, in 90° angularly disposed position from Fig. 1, of the insert and insert-receiving cartridge,

Fig. 3 shows an enlarged top view of the thread cutting insert of the invention; and

Fig. 4 shows a section along the line IV-IV in Fig. 3.

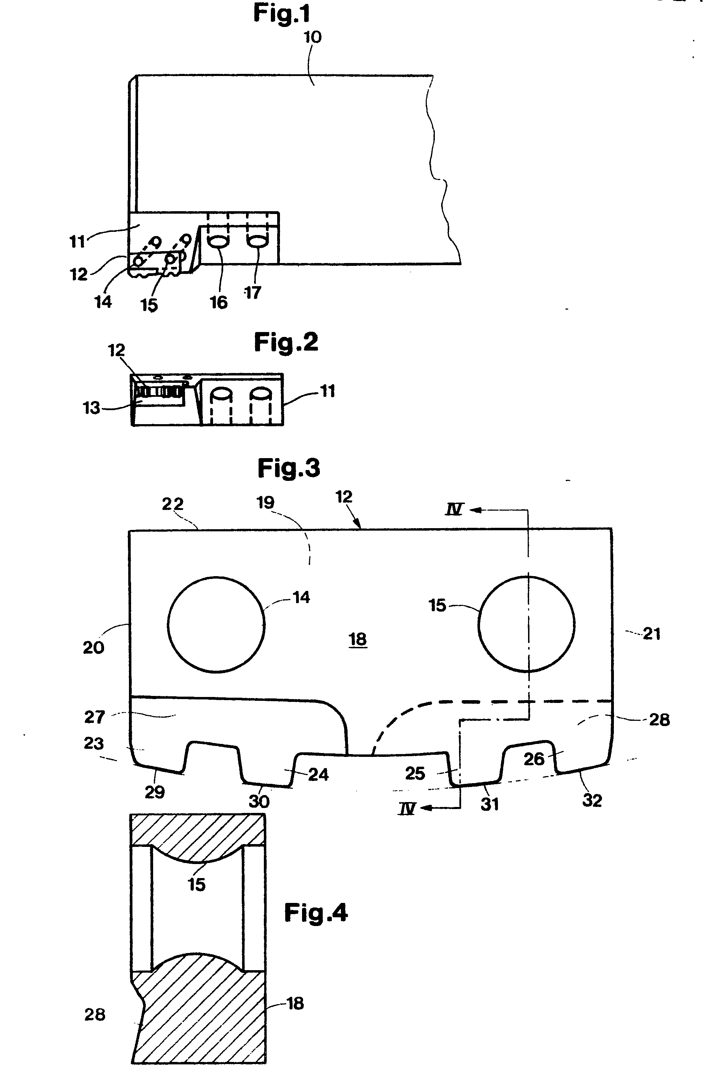

Referring to the drawings, Fig. 1 illustrates a tool consisting of a bar 10 provided with a holder or a cartridge 11. In the cartridge 11 there is located a cutting insert 12, and a shim plate 13 supported against complementary support surfaces of a recess, said insert and said shim plate 13 being adapted to be jointly clamped into the cartridge 11 by means of clamping means (not shown) to be engaged into bores 14, 15 passing through the insert and the shim plate.

The cartridge 11 is similarly clamped into the bar with clamping means (not shown) engaging two radially disposed apertures, 16, 17 passing through said cartridge.

The illustrated insert 12 of the invention is in the shape of a rectangular block and therefore comprises a top surface 18 and a bottom surface 19 parallel with each other. Additionally there are two surfaces extending transversely of the block defining parallel block end surfaces 20, 21 to function as end support surfaces. The end surfaces 20, 21 are located at a right angle at the intersection of the top and bottom surfaces. The remaining surfaces are longitudinally extending side surfaces, one of which is designated 22, and planar in shape whilst located at right angle at its junction with said end, top and bottom surfaces, so as to function as a side support surface upon clamping into the cartridge 11, the other opposite side surface being serrated so as to define an even number of cutting teeth 23, 24, 25 and 26, which extend entirely between said top and bottom surfaces 18, 19. Further, the distance between the front end face 29, 30 of said cutting teeth and said side support surface 22, measured transversely of the block, being successively increasing in an order to succession from the first tooth 23 to and including tooth 24, whereas the distance between front faces 31, 32 of said side surface 22 and subsequent teeth 25 and 26 decreasing similarly. Each of said teeth 23, 24, 25 and 26 are trapezoidal in shape. Chip breaking grooves 27, 28 are formed on said top and bottom surfaces 18, 19 such that one groove 27 is located on top surface 18 on the top side of cutting teeth 23, 24, whilst the other chip groove 28 is provided in the bottom surface 19 adjacent cutting teeth 25, 26. Each said chip groove defines the rake face of the insert and consists of a depression initially increasing in depth in a direction away from the front end face of the cutting teeth and thereafter decreasing in said direction.

4

When subjected to a thread cutting operation only the two cutting teeth 23 and 24 are intended to be in engagement with the workpiece. When it is deemed necessary to have new cutting teeth brought in for cutting the insert is reversed upside down in such a manner that cutting teeth 23, 24 and 25, 26 respectively change places, so that the teeth 25, 26 will form the new teeth for engagement with the workpiece. The insert 12 is as already indicated clamped into said cartridge 11 by means of pin lock means (not shown) that engages with the two bores 14 and 15, which pass entirely through the insert, whilst orientated perpendicular to the top and bottom surfaces 18 and 19 respectively. Both these bores 14 and 15 are non-centrally located but symmetrically arranged relative to the centre of the insert so as to enable the insert to be reversed when indexing of the insert is considered needful.

The advantages of the insert for thread cutting inserts described above is primarily that it is reversible and as such very well suited for grinding and regrinding operations. It enables a very stable clamping because of its two non-centrally passing bores, which both can be engaged with correspondingly dimensioned pin locking means. Because of its reversible shape and nature one set of cutting teeth is always protected from wear mechanisms when the remainder of the cutting teeth are engaged in a cutting operation.

## Claims

1. Cutting insert for thread cutting operations comprising a block of basically prismatic shape confined by parallel top and bottom surfaces and four side surfaces therebetween, two of which side surface being transversely extending block end surfaces adapted to function as end supporting surfaces, c h a r a c t e r i z e d in that one of said side surfaces is adapted to function as a side supporting surface (22), whereas the opposite side surface being serrated so as to expose an even number of cutting teeth (23, 24, 25, 26) that extend entirely between the top surface (18) and the bottom surface (19), the distance between the front end faces (29, 30, 31, 32) of said cutting teeth and said side support surface (22) measured transversely of the block being successively increasing in an order of succession from the first tooth to and including half the number of teeth whereas corresponding distance between the subsequent half number of teeth and said side support surface decreasing similarly.

2. Cutting insert as defined in claim 1, c h a r a c t e r i z e d in that the insert is in the shape of a rectangular block and the cutting teeth (23, 24, 25, 26) being trapezoidal in shape.

3. Cutting insert as defined in claim 1, c h a r a c t e r i z e d in that two chip grooves (27, 28) being provided in such manner that one groove (27) is formed as a depression into the top surface (18) to provide the rake face for half the number of teeth, the second groove (28) being formed into the bottom surface (19) to provide rake face of the remaining teeth.

4. Cutting insert as defined in claim 1, c h a r a c t e r i z e d in that the insert is provided with two holes (14, 15), which pass non-centrally through the top

6

and bottom surfaces (18, 19) disposed to receive a pin member to secure the insert into clamping engagement with complementary support surfaces of a recess in a holder (10).

5. Cutting insert as defined in claim 3, c h a r a c - t e r i z e d  in that each of said chip grooves (27, 28) consists of a depression initially increasing in depth in a direction away from the front end face of the teeth and thereafter decreasing in said direction.

**Fig.1**

10

11
12
14 15 16 17

**Fig.2**

12
13
11

**Fig.3**

22 19 12 IV

14 15 21

18

20

27 28

23 24 25 26 31 32

29 30

IV

15

**Fig.4**

28 18